# NEUE EUROPÄISCHE PATENTSCHRIFT

(11) **EP 1 954 426 B2**
(45) Veröffentlichungstag und Bekanntmachung des Hinweises auf die Entscheidung über den Einspruch: **23.08.2017**
(45) Hinweis auf die Patenterteilung: 21.08.2013
(21) Anmeldenummer: 06807593.6
(22) Anmeldetag: 26.10.2006
(51) Int. Cl.: B22D 11/128, B65G 39/00

(54) **VORRICHTUNG ZUM ANKUPPELN EINER KÜHLMITTELZUFÜHRUNG AN EINE WALZE**
APPARATUS FOR COUPLING A COOLANT SUPPLY TO A ROLL
DISPOSITIF D 'ACCOUPLEMENT D 'UN SYSTÈME DE GUIDAGE DE RÉFRIGÉRANT AVEC UN ROULEAU

(30) Priorität: 28.10.2005 DE 102005052067
(43) Veröffentlichungstag der Anmeldung: 13.08.2008
(73) Patentinhaber: Georg Springmann Industrie- und Bergbautechnik GMBH, 45472 Mülheim an der Ruhr (DE); SMS group GmbH, 40237 Düsseldorf (DE)
(72) Erfinder: SPRINGMANN, Georg, 45468 Mülheim (DE); WARMBIER, Dieter, 47441 Moers (DE); HASSELBRINK, Dirk, 47059 Duisburg (DE); ZENZ, Ulrich, 47228 Duisburg (DE); JONEN, Peter, 47249 Duisburg (DE); STEUTEN, Michael, 47447 Moers (DE)
(74) Vertreter: Nobbe, Matthias
(86) Internationale Anmeldenummer: PCT/EP2006/067840
(87) Internationale Veröffentlichungsnummer: WO 2007/048834

(56) Entgegenhaltungen:
- WO-A-2004/091830
- DE-C1- 19 752 336

## Beschreibung

Die Erfindung betrifft eine Vorrichtung zum Ankuppeln einer Kühlmittelzuführung an eine Walze für Stranggießanlagen gemäß Anspruch 1.

Bei Stranggießanlagen läuft rot glühender Stahl in Strangform über Walzen, die außen über Zapfen in einem Lagerbock mittels Wälzlagern gelagert sind. Die Walzen werden in einem geschlossenen Kreislauf durch Zuführung eines Kühlmittels (insbesondere Wasser) unter Druck in das Innere der Walze zur Abführung der Wärme gekühlt, was beispielsweise über die Wasserführung über eine durch die Zapfen geführte axiale Walzenbohrung realisierbar ist.

Aus DE 42 07 042 C1 ist eine Vorrichtung zum Ankuppeln der Kühlmedienzuführung an eine Stütz- und/oder Transportwalze insbesondere für Stranggießanlagen bekannt, bei welcher jeder Lagerbock durch einen Deckel verschlossen ist. Der Deckel weist einen Kühlkanal auf, der mit einem weiteren Kühlkanal im Lagerbock zum Anschluss an eine Kühlmittelzufuhr bzw.-abfuhr in Verbindung steht und an seinem anderen Ende im Bereich der Zapfenbohrung mündet. Die auf diese Weise ausgebildete verkapselte Einheit bewirkt einen relativ guten Schutz der Bauelemente gegen Verschleiß, da die Bauelemente gegen die z. T. aggressive Umgebung der Stranggießanlage (z.B. Spritzwasser) sowie gegenüber äußeren mechanischen Einwirkungen geschützt sind.

Diese Vorrichtung besitzt jedoch zum einen den Nachteil, dass die zur Ausbildung des Kühlmittelkanals exakt aufeinander abgestimmten Elemente aus Lagerbock und Lagerbockdeckel eine Umrüstung bestehender Stranggießanlagen erschweren. Vor allem aber ist die Durchführung von Wartungsarbeiten an dieser Vorrichtung dadurch erschwert, dass der gesamte Lagerbockdeckel demontiert werden muss, um einen Zugang zu den von diesem abgedeckten Bauelementen (dem elastischen Kompensator, den daran vorgesehenen Dichteinheiten, Wälzlagern etc.) zu ermöglichen.

Aus der DE-A1-10017184 ist eine zweiteilige Drehdurchführung zum Ankuppeln einer Kühlmittelzuführung an eine Walze, die über Zapfen in Lagerböcken in Wälzlagern gelagert ist und die über axiale Bohrungen durch die Zapfen mit dem Kühlmittel versorgt wird, insbesondere für Stranggießanlagen, bekannt.

Aus der WO0491830 ist eine weitere Vorrichtung zum Ankuppeln einer Kühlmittelzuführung an eine Walze bekannt, wobei die Walze über Zapfen in einem Lagerbock mittels Wälzlagern gelagert ist und über wenigstens eine durch die Zapfen geführte axiale Walzenbohrung mit einem Kühlmittel versorgbar ist, einen Lagerbockdeckel, der an dem Lagerbock zur Abdeckung der Walzenbohrung festlegbar ist und wenigstens einen an die Kühlmittelzuführung anschließbaren Kühlmittelkanal aufweist, und eine zwischen der Walzenbohrung und dem Lagerbockdeckel angeordnete Dichteinheit umfasst.

Bei dieser Vorrichtung kann bei aus dem Lagerbockdeckel demontiertem Einsatzstück ein Zugriff von außen, insbesondere auf die Dichteinheit, beispielsweise zur Durchführung von Wartungsarbeiten, erfolgen, ohne dass ein Abnehmen des gesamten Lagerbockdeckels notwendig ist.

Obgleich diese beiden letztgenannten aus dem Stand der Technik bekannten Dreheinführungen bereits gute Eigenschaften insbesondere auch hinsichtlich der Standzeiten und Wartungseigenschaften besitzen, ist eine hinsichtlich der Wartungsfreundlichkeit und Zugänglichkeit der verwendeten Komponenten weiter verbesserte Dreheinführung wünschenswert.

Die Aufgabe der vorliegenden Erfindung besteht daher darin, die im Stand der Technik bekannten Dreheinführungen hinsichtlich der Wartungsfreundlichkeit und Zugänglichkeit der Komponenten weiter zu verbessern.

Die Aufgabe der Erfindung wird gelöst durch Bereitstellung einer Vorrichtung mit den Merkmalen des Hauptanspruches.

Genauer betrifft die Erfindung in einer ersten Ausführungsform eine Vorrichtung zum Ankuppeln einer Kühlmittelzuführung an eine Walze für Stranggießanlagen, wobei die Walze über Zapfen in einem Lagerbock mittels Wälzlagern gelagert ist und über eine durch die Zapfen geführte axiale Walzenbohrung mit einem Kühlmittel versorgbar ist, mit
- einer an dem Walzenzapfen zum Ankuppeln an die Walzenbohrung druckdicht festlegbaren Dichteinheit mit einer axialen Bohrung; und
- einem Lagerbockdeckel, der an dem Lagerbock zur Abdeckung der axialen Walzenbohrung festlegbar ist und wenigstens einen an die Kühlmittelzuführung anschließbaren Kühlmittelkanal, der über die Dichteinheit an die axiale Walzenbohrung kuppelbar ist, aufweist;
wobei die Dichteinheit als zweiteilige Dichteinheit ausgebildet ist, die eine in die Walzenbohrung einsteckbare Buchse mit einem an der Buchse festgelegten und sich damit drehenden ersten Dichtelement, das eine erste Dichtfläche aufweist, und ein zweites Dichtelement, das eine auf der ersten Dichtfläche ablaufende zweite Dichtfläche aufweist und das von dem Lagerbockdeckel getragen wird oder in diesen integriert ist, umfasst,
wobei die beiden Dichtelemente als aufeinander ablaufende Gleitringe ausgebildet sind,
wobei die in die Walzenbohrung einsteckbare Buchse im montierten Zustand über eine schraubenlose Steckverbindung in der Walzenbohrung gesichert ist,
wobei in den Lagerbockdeckel ein die Dichteinheit im montierten Zustand tragendes Einsatzstück einsetzbar ist und
wobei das Einsatzstück zum druckdichten Ankuppeln der Kühlmittelzuführung über die Dichteinheit an die axiale Walzenbohrung wenigstens einen Kühlmittelkanal aufweist, welcher im montierten Zustand des Einsatzstückes an den Kühlmittelkanal im Lagerbockdeckel (9) und die Dichteinheit ankuppelt,
wobei das Einsatzstück derart bemessen ausgebildet ist, dass es im demontierten Zustand das Entfernen der Buchse aus der Walzenbohrung ohne Entfernen des Lagerbockdeckels ermöglicht, wobei das erste Dichtelement von einer elastischen Hülse in Form eines Kompensators getragen wird, die an der in die Walzenbohrung einsteckbaren Buchse druckdicht festgelegt ist, und
wobei die Buchse mit einem Anschlag zur Begrenzung der Einstecktiefe in die axiale Walzenbohrung versehen ist.

Erfindungsgemäß kann die das Dichtelement tragende Buchse in eine Aufnahme in der Walzenbohrung eingesteckt werden und ist im montierten Zustand über eine schraubenlose Steckverbindung mit der Walzenbohrung lösbar verbunden. In einfachsten Fall kann die Buchse in der Walzenbohrung, die vorzugsweise als zylindrische Aufnahme ausgebildet ist, über einen oder mehrere O-Ringe, die in dem Spalt zwischen Buchse und Walzenbohrung, beispielsweise in jeweils einer Außennut in der Buchse oder in jeweils einer Innennut in der Bohrung, angeordnet sind, gesichert sein.

Infolge der Ausgestaltung der Verbindung zwischen Buchse und Aufnahme in der Walzenbohrung als schraubenlose Steckverbindung lässt sich bei der Montage der erfindungsgemäßen Vorrichtung die Buchse mit daran festlegbarem Dichtelement einfach in die Walzenbohrung in eine Einsteckposition, bevorzugt formschlüssig, ohne Verschraubung einstecken, und ebenso einfach lässt sich die Buchse zu Wartungsarbeiten bei abgenommenem Lagerbockdeckel, falls erforderlich mit Hilfe eines Abziehwerkzeuges, aus der Walzenbohrung abziehen, ohne dass zuvor Schrauben gelöst werden müssen. Auf diese Weise wird eine besonders einfache und schnelle Montage gewährleistet.

Gemäß einer zweiten Ausführungsform betrifft die Erfindung eine Vorrichtung zum Ankuppeln einer Kühlmittelzuführung an eine Walze für Stranggießanlagen, wobei die Walze über Zapfen in einem Lagerbock mittels Wälzlagern gelagert ist und über eine durch die Zapfen geführte axiale Walzenbohrung mit einem Kühlmittel versorgbar ist, mit
- einer an dem Walzenzapfen zum Ankuppeln an die Walzenbohrung druckdicht festlegbaren Dichteinheit mit einer axialen Bohrung; und
- einem Lagerbockdeckel, der an dem Lagerbock zur Abdeckung der axialen Walzenbohrung festlegbar ist und wenigstens einen an die Kühlmittelzuführung anschließbaren Kühlmittelkanal, der über die Dichteinheit an die axiale Walzenbohrung kuppelbar ist, aufweist;
- wobei die Dichteinheit als zweiteilige Dichteinheit ausgebildet ist, die eine in die Walzenbohrung einsteckbare Buchse mit einem an der Buchse festgelegten und sich damit drehenden ersten Dichtelement, das eine erste Dichtfläche aufweist, und ein zweites Dichtelement, das eine auf der ersten Dichtfläche ablaufende zweite Dichtfläche aufweist und das von dem Lagerbockdeckel getragen wird oder in diesen integriert ist, umfasst,
- wobei die beiden Dichtelemente als aufeinander ablaufende Gleitringe ausgebildet sind,
- wobei die in die Walzenbohrung einsteckbare Buchse im montierten Zustand über eine schraubenlose Steckverbindung in der Walzenbohrung gesichert ist,
- wobei in den Lagerbockdeckel ein die Dichteinheit im montierten Zustand tragendes Einsatzstück einsetzbar ist und wobei das Einsatzstück zum druckdichten Ankuppeln der Kühlmittelzuführung über die Dichteinheit an die axiale Walzenbohrung wenigstens einen Kühlmittelkanal aufweist, welcher im montierten Zustand des Einsatzstückes an den Kühlmittelkanal im Lagerbockdeckel und die Dichteinheit ankuppelt, und
- wobei das Einsatzstück derart bemessen ausgebildet ist, dass es im demontierten Zustand das Entfernen der Buchse aus der Walzenbohrung ohne Entfernen des Lagerbockdeckels ermöglicht,
- wobei das zweite Dichtelement von einer elastischen Hülse getragen wird, die am Lagerbockdeckel druckdicht festgelegt ist, und
- wobei die Buchse mit einem Anschlag zur Begrenzung der Einstecktiefe in die axiale Walzenbohrung versehen ist.
Bei Ausführung der Dichteinheit als zweiteilige Dichteinheit verbleibt im Wartungsfall nach Abnehmen des Lagerbockdeckels das auf dem Lagerbockdeckel festgelegte Dichtelement auf dem Lagerbockdeckel, während die über eine schraubenlose Steckverbindung in der Walzenbohrung gesicherte Buchse mit darauf festgelegtem Dichtelement in der Walzenbohrung verbleibt. Im nächsten Schritt können dann die Buchse aus der Walzenbohrung und das auf dem Lagerbockdeckel festgelegte Dichtelement, falls über eine schraubenlose Steckverbindung mit dem Lagerbockdeckel gesichert, einfach abgezogen werden. So wird ohne Notwendigkeit einer Schraubenverbindung eine schnelle Montage oder Demontage der erfindungsgemäßen Vorrichtung möglich.

Gemäß der ersten Ausführungsform der erfindungsgemäßen Vorrichtung wird das erste Dichtelement von einer elastischen Hülse getragen, die an der in die Walzenbohrung einsteckbaren Buchse druckdicht festgelegt ist. Das erste Dichtelement läuft bei Rotation der Walze im Betrieb mit seiner Dichtfläche auf der Dichtfläche des zweiten Dichtelementes, das von dem Lagerbockdeckel getragen wird, ab. In einer dazu umgekehrten Anordnung wird das zweite Dichtelement von einer elastischen Hülse getragen, die am Lagerbockdeckel druckdicht festgelegt ist, während das erste Dichtelement von der in die Walzenbohrung einsteckbaren Buchse getragen wird.

In beiden Anordnungen der Dichtelemente im montierten Zustand werden die Dichtelemente durch den Anpressdruck der elastischen Hülse, bevorzugt eines Kompensators, in der Betriebsposition gehalten und dichten so auf zuverlässige Weise. Vorzugsweise ist der Kompensator so bemessen, dass der Kompensator in der Betriebsposition mit einer - beim Zusammenbau infolge der Länge des Kompensators erzeugten - Vorspannung eingebaut ist, um den Anpressdruck der beiden Dichtelemente aufeinander zu erhöhen.

Erfindungsgemäß weist die erfindungsgemäße Vorrichtung eine Dichteinheit auf, die zwei aufeinander ablaufende Gleitringe als Dichtelemente umfasst, wobei der eine Gleitring von dem Lagerbockdeckel und der andere Gleitring von der elastischen Hülse getragen wird. Bei dieser Ausführungsform wird gewährleistet, dass die auf die Dichteinheit einwirkenden Kippmomente bei Belastung der Walze im Betrieb infolge der radialen Beweglichkeit der Gleitringe und der elastischen Hülse kompensiert werden und so die Lebensdauer der Vorrichtung erhöht wird. Erfindungsgemäß sind Gleitringe aus einem harten Material, insbesondere Siliciumcarbid, bevorzugt.

Weiterhin ist die Buchse mit einem Anschlag zur Begrenzung der Einstecktiefe in die axiale Walzenbohrung versehen. Ein solcher Anschlag kann beispielsweise in Form eines Kragens an der Buchse, der außenseitig am Walzenzapfen anliegt oder in diesen eingreift, ausgebildet sein. Alternativ können auch Vorsprünge oder Zapfen am Rand der Buchse vorgesehen sein, die ein zu weites Einschieben der Buchse in die Walzenbohrung verhindern.

Um zu verhindern, dass die in der Aufnahme in der Walzenbohrung mittels der schraubenlosen Steckverbindung festgelegte Buchse durch Beaufschlagung des dem Walzeninneren zugewandten Endes der Buchse mit Dampfdruck infolge eines Dampfstosses in der Stranggiessanlage zu weit aus der jeweiligen Betriebsposition bewegt wird und die Dichteinheit, insbesondere die elastische Hülse, Schaden erleidet, kann auf einem der beiden Dichtelemente ein Anschlag, der in Form eines das Dichtelement radial umgebenden Kragens ausgebildet sein kann, vorgesehen sein, der bei Beaufschlagung der Buchse mit Druck infolge des Dampfstosses gegen das andere Dichtelement gepresst wird und so die relative radiale Beweglichkeit der beiden Dichtelemente begrenzt. Wirkungsgleich mit einem Kragen können auch in zur Walzenachse koaxialer Richtung sich erstreckende Vorsprünge vorgesehen sein.

Obgleich eine Sicherung der Buchse in der Aufnahme der Walzenbohrung bereits mit einem oder mehreren O-Ringen erreicht werden kann und somit auch ein Verdrehen der Buchse in der Walzenbohrung bereits verhindert werden kann, kann/können die schraubenlose Steckverbindung(en), auch auf Seiten des Lagerbockdeckels, mit einer Verdrehsicherung versehen sein. Ein solche Verdrehsicherung kann beispielsweise in Form eines oder mehrerer Vorsprünge an der Buchse ausgebildet sein, die in walzenzapfenendseitig korrespondierende Ausnehmungen eingreifen. Diese Ausnehmung(en) kann/können auch in einer das Walzenzapfenende und die Wälzlager überdeckenden Ringplatte ausgebildet sein. In einer bevorzugten Form kann die Verdrehsicherung auch an einem endständigen Kragen, der am Walzenzapfenende anliegt oder in diesen eingreift, in Form eines Vorsprunges, der im montierten Zustand in eine walzenzapfenendseitige korrespondierende Ausnehmung eingreift, ausgebildet sein. Möglich ist auch die Verwendung einer Sicherung nach Art eines Bajonettverschlusses.

Durch die Buchse und die Dichteinheit kann zur Wasserzuführung für den Betrieb der Stranggiessanlage ein Siphonrohr, das am Lagerbockdeckel festlegbar ist, eingesteckt werden, durch das das Kühlmedium, bevorzugt Kühlwasser, in das Innere der Walze geleitet wird. Die Buchse ist in der Regel daher an beiden Seiten offen.

Zum Entfernen bei Wartungsarbeiten kann die Buchse - im montierten Zustand - mit einem Abziehwerkzeug zum Abziehen der Buchse aus der Walzenbohrung in Eingriff bringbar sein. Dazu kann die Buchse Abziehmittel aufweisen, die im montierten Zustand der Buchse mit einem Abziehwerkzeug zum Abziehen vom Walzenzapfen in Eingriff bringbar sind. Diese Abziehmittel können Bohrungen in der Buchse sein, mit denen das Abziehwerkzeug in Eingriff gebracht werden kann, oder die Buchse kann so bemessen sein, dass in der Einsteckposition zwischen Buchse und Walzenbohrung zum Walzeninneren hin ein axialer Zwischenraum verbleibt, in den Haken eingebracht werden können, die an oder hinter der Buchse eingreifen und so ein Herausziehen aus der Walzenbohrung erlauben.

Die Wartung der erfindungsgemäßen Vorrichtung ist dadurch, dass in eine zur Walzenachse koaxiale Bohrung im Lagerbockdeckel ein die Dichteinheit im montierten Zustand tragendes Einsatzstück einsetzbar ist. Dabei weist das Einsatzstück zum druckdichten Ankuppeln des Kühlmittelkanals über die Dichteinheit an die Walzenbohrung wenigstens einen Kühlmittelkanal auf, welcher im montierten Zustand des Einsatzstückes an den Kühlmittelkanal im Lagerbockdeckel und an die Dichteinheit ankuppelt.

Das Einsatzstück und die zugehörige Bohrung im Lagerbockdeckel sind dabei im Durchmesser so bemessen und aufeinander abgestimmt, dass die Buchse bei abgenommenem Einsatzstück, falls erforderlich mit Hilfe eines Abziehwerkzeuges, aus der Bohrung in der Walze durch die Bohrung im Lagerbockdeckel hindurch herausgezogen werden kann, ohne dass der Lagerbockdeckel entfernt werden muss. Diese Ausführungsform ermöglicht auf besonders einfache Weise den Zugriff auf die Komponenten der Dreheinführung, ohne dass Befestigungsschrauben innerhalb des vom Lagerbockdeckel abgedeckten Raumes gelöst werden müssen. Die Komponenten der erfindungsgemäßen Vorrichtung lassen sich somit auf einfache Weise inspizieren und bei Wartungsarbeiten, falls erforderlich, austauschen.

Das Einsatzstück weist wenigstens einen Kühlmittelkanal auf, welcher im montierten Zustand des Einsatzstückes an einen Kühlmittelkanal im Lagerbockdeckel ankuppelt.

Gemäß einer anderen Ausführungsform weist das Einsatzstück einen ersten Kühlmittelkanal und einen zweiten Kühlmittelkanal auf, welche im montierten Zustand des Einsatzstückes an einen ersten bzw. zweiten Kühlmittelkanal im Lagerbockdeckel ankuppeln. Der eine Kühlmittelkanal des Lagerbockdeckels ist an eine Kühlmittelzufuhr und der andere Kühlmittelkanal an eine Kühlmittelabfuhr anschließbar. Bei dieser so genannten Duo-Dreheinführung wird das Kühlmittel durch den ersten Kühlmittelkanal und die Dichteinheit und ein Siphonrohr in das Innere der Walze geleitet und durch den zweiten Kühlmittelkanal in den Lagerbockdeckel zurückgeleitet, beispielsweise zu einer Wasserabführung am Boden, um von dort abgeführt zu werden.
Das Siphonrohr ist dabei in das Einsatzstück einsteckbar und bildet somit einen konzentrisch um die Walzenachse angeordneten Ringspalt zur Rückführung des Kühlmediums aus.

Gemäß einer Weiterbildung ist in den wenigstens einen Kühlmittelkanal des Lagerbockdeckels ein Verbindungsrohr zum Anschluss an eine an die Kühlmittelabfuhr und/oder Kühlmittelzufuhr gekuppelte Lagerbockaufstandsfläche einsetzbar, so dass der Anschluss an die beispielsweise bodenseitig geführten Kühlwasserzu- und -ableitungen gewährleistet ist.

In einer weiteren Ausführungsform kann die erfindungsgemäße Vorrichtung derart ausgebildet sein, dass der Lagerbockdeckel einen an dem Lagerbock angeordneten Befestigungskragen aufweist, mittels dessen der Lagerbockdeckel am Lagerbock über Befestigungsschrauben festgelegt werden kann, und dass der gegenüber dem Befestigungskragen erhabene Bereich des Lagerbockdeckels, in den das Einsatzstück einsetzbar ist, etwa einen Durchmesser in der Größe des Durchmessers des Wälzlagers im Lagerbock besitzt. In den erhabenen Bereich des Lagerbockdeckels kann der mindestens eine vom Einsatzstück weg bzw. zum Einsatzstück hin führende Kühlwasserkanal radial nach außen zum Rand des Lagerbockdeckels durchgebohrt sein, wobei diese Bohrung im Betrieb der Stranggießanlage jeweils vorzugsweise durch einen Schraubstopfen verschlossen ist. Dieser Schraubstopfen kann zu Wartungsarbeiten bei Stillstand der Anlage ausgeschraubt werden, wodurch die Zuführung von Pressluft ermöglicht wird, um das Innere der Walze durch Ausblasen vom Kühlwasser zu befreien.

Seitens der Erfinder wurde weiterhin herausgefunden, dass eine Vorrichtung zum Ankuppeln einer Kühlmittelzuführung an eine Walze, insbesondere für Stranggießanlagen, wie die erfindungsgemäße, mit einer Gleitringpaardichtung in ihrer Wartungsfreundlichkeit dadurch verbessert werden kann, dass die Dichteinheit als eine zweiteilige Dichteinheit ausgebildet ist, die einen ersten Gleitring, der eine erste Dichtfläche aufweist, und einen zweiten Gleitring, der eine auf der ersten Dichtfläche ablaufende zweite Dichtfläche aufweist, jeweils in einer Gleitringhalterung umfasst, wobei zumindest einer der beiden Gleitringe einen außen umlaufenden Gleitringkragen aufweist und in eine zylindrische Vertiefung in der Gleitringhalterung einsetzbar ist, wobei der Gleitring mittels eines in eine umlaufende Nut in der Gleitringhalterung einsetzbaren Sicherungsringes sicherbar ist. Auf diese Weise wird gewährleistet, dass der Gleitring einfach in seine Halterung einsetzbar ist und durch einen Sicherungsring gesichert werden kann, ohne dass es einer Klebung des Gleitringes bedarf. Im Wartungsfalle wird der Sicherungsring, beispielsweise mit Hilfe einer Zange, abgenommen, und der Gleitring kann aus der Halterung entnommen werden. In einer weiteren Ausbildung einer Gleitringpaardichtung ist zumindest einer der beiden Gleitringe mit zumindest einem Vorsprung versehen, der in eine entsprechende Ausnehmung in der den Gleitring aufnehmenden Halterung eingreift. So wird auf zuverlässige Weise ein Verdrehen des Gleitringes in der Halterung verhindert.

Weitere Ausgestaltungen der Erfindung sind der nachfolgenden Beschreibung sowie den Unteransprüchen zu entnehmen.

Die Erfindung wird nachstehend anhand von dem in den beigefügten Abbildungen dargestellten Ausführungsbeispiel näher erläutert.

Es zeigen:
Figur 1 eine Teilansicht einer Ausführungsform der erfindungsgemäßen Vorrichtung im Längsschnitt;
Figur 2 eine Teilansicht einer weiteren Ausführungsform der erfindungsgemäßen Vorrichtung im Längsschnitt; und
Figur 3 eine Querschnittsansicht der Ausführungsform der erfindungsgemäßen Vorrichtung entlang der Linie A-A aus Figur 1.

Gemäß Fig.1 dient eine erfindungsgemäße Vorrichtung 1 zum Ankuppeln einer (nicht dargestellten) Kühlmittelzuführung an eine Walze 2 einer Stranggießanlage, wobei die Walze 2 über einen Zapfen 3 in einem Lagerbock 4 mittels Wälzlagern 5 gelagert ist. Die Walze 2 ist über eine durch den Zapfen 3 geführte axiale Walzenbohrung 6 mit einem Kühlmittel versorgbar.

In den Walzenzapfen 3 ist eine Buchse 7, bevorzugt formschlüssig, einsteckbar, welche zur Aufnahme einer vorzugsweise als Kompensator ausgebildeten elastischen Hülse 8 dient. Neben der bevorzugten Ausgestaltung der Hülse in Form eines Kompensators aus Edelstahl kann die elastische Hülse auch aus anderen, eine Elastizität verleihenden Materialien, beispielsweise in Form eines gegebenenfalls mit Gewebe verstärkten Gummihohlzylinders, der in die Buchse 7 eingepasst ist, ausgebildet sein. Hierdurch wird eine besondere Flexibilität der Hülse 8 ermöglicht und der Verschleiß der erfindungsgemäßen Vorrichtung bei Belastung der Walze wird vermindert.

Die Buchse 7 ist mit Mitteln zur Begrenzung der Einstecktiefe in die Walzenbohrung versehen, die im einfachsten Fall in Form eines endständigen Kragens 24, der am Walzenzapfenende anliegt oder in eine das Ende des Walzenzapfens 3 überdeckende Ringplatte 22 eingreift, ausgebildet sein kann. Zusätzlich kann die Buchse 7 mit zumindest einer Verdrehsicherung, die im montierten Zustand in eine walzenzapfenendseitig korrespondierende Ausnehmung eingreift, versehen sein. Diese Ausnehmung kann auch in der Ringplatte 22 ausgebildet sein.

Auf dem Lagerbock 4 ist ein Lagerbockdeckel 9 festgelegt. Der Lagerbockdeckel 9 weist gemäß dem dargestellten Ausführungsbeispiel einen ersten Kühlmittelkanal 17 sowie bei einer Zuführung und Abführung des Kühlwassers auf derselben Seite der Walze einen zweiten Kühlmittelkanal 18 auf, wobei ein Ende des Kühlmittelkanals 17 an eine Kühlmittelzufuhr und ein Ende des Kühlmittelkanals 18 an eine Kühlmittelabfuhr (beide nicht dargestellt) anschließbar sind.

Der in Fig.1 gezeigte Lagerbockdeckel 9 überdeckt die Seitenfläche des Lagerbockes 4 zumindest teilweise. Dabei ist in den Lagerbockdeckel 9 ein Einsatzstück 14 mit einem daran druckdicht festgelegten Siphonrohr 15 eingesetzt. Das in das Walzeninnere hineinragende Siphonrohr 15 ist so bemessen, dass es in den nach außen weisenden Endabschnitt des in das Innere der Walze reichenden, in der Figur nicht dargestellten Führungsrohres für das Kühlwasser hineinragt und zwischen den Rohren ein Ringspalt gebildet wird. Der Ringspalt ist so bemessen, dass einerseits eine relative Verdrehbarkeit der Rohre gegeben ist und gleichzeitig ein Durchfluss von Kühlwasser verhindert wird.

Das Einsatzstück 14 weist, wie aus Fig. 3 ersichtlich, einen ersten Kühlmittelkanal 11, der an das Siphonrohr 15 angekuppelt ist, und, wie in den Figuren gezeigt, bei einer Zuführung und Abführung des Kühlwassers auf derselben Seite der Walze einen zweiten Kühlmittelkanal 12 zur Abführung des Kühlwassers auf. Die Kühlmittelkanäle 11 und 12 münden jeweils an die Kühlmittelkanäle 17 und 18 im Lagerbockdeckel 9, sowie anderenends derart an die Walzenbohrung 6, dass die Walzenbohrung zur Zu-, bzw. Abführung des Kühlwassers an die Kühlmittelkanäle 11 und 12 angekuppelt wird.

Gemäß Fig.1 ist zwischen Einsatzstück 14 und Walzenbohrung 6 eine Dichteinheit vorgesehen, die gemäß dem Ausführungsbeispiel einen auf dem der Buchse 7 zugewandten Ende des Einsatzstückes 14 angeordneten Gleitring als Dichtelement 19 und, diesem Dichtelement 19 entsprechend, ein weiteres als Gleitring ausgebildetes Dichtelement 20 an einem an dem dem Lagerbockdeckel 9 zugewandten Ende der Hülse 8 angeordneten Ansatzstück 21 aufweist. Gemäss dem Ausführungsbeispiel aus Fig. 1 sind daher die Dichtflächen der Dichtelemente 19 und 20 senkrecht zur Drehachse der Walze angeordnet.

Vorzugsweise ist zumindest einer der beiden Gleitringe 18,19, insbesondere aus Siliciumcarbid, mittels eines Sicherungsringes 23 auf dem Einsatzstück 14 bzw. dem Ansatzstück 21 der elastischen Hülse 8 gesichert. In einer Weiterbildung weist zumindest einer der beiden Gleitringe 18,19 an seinem dem anderen Gleitring 18,19 abgewandten Ende einen außen umlaufenden Gleitringkragen auf und ist in eine zylindrische Vertiefung in dem Einsatzstück 14 bzw. in dem Ansatzstück 21 oder der elastischen Hülse 8 einsetzbar, wobei der Gleitring 18,19 mittels eines in eine zylinderinnenseitig umlaufende Nut in der zylindrischen Vertiefung einsetzbaren und am Gleitringkragen angreifenden Sicherungsringes 23 sicherbar ist.

In die Kühlmittelkanäle 17 und 18 des Lagerbockdeckels 9 können jeweils auf deren dem Einsatzstück 14 abgewandten Ende (nicht dargestellte) Verbindungsrohre eingesetzt und so an die Lagerbockaufstandsfläche 13 angeschlossen werden, welche wiederum an die (nicht dargestellte) Kühlmittelabfuhr und/oder Kühlmittelzufuhr gekuppelt ist.

Der Lagerbockdeckel 9 kann mit zur Walzenachse koaxialen Bohrungen (nicht dargestellt) in die Kühlmittelkanäle 17 und 18 versehen sein, die durch eindrehbare (nicht dargestellte) Verschlussstopfen verschließbar sind. Die Verschlussstopfen können bei Wartungsarbeiten an der Stranggießanlage ausgeschraubt werden. So kann man die Zuführung eines Spülmediums wie Pressluft erlauben, um das Walzeninnere durch Ausblasen von dem Kühlwasser zu befreien und so die Wartungsarbeiten zu erleichtern.

Die Befestigung des Lagerbockdeckels 9 an dem Lagerbock 4 erfolgt bevorzugt lösbar über Befestigungsschrauben 10, die entlang des Kreisumfangs des Lagerbockdeckels 9 insbesondere äquidistant angeordnet sein können. Ebenso ist das Einsatzstück 14 an dem Lagerbockdeckel über Befestigungsschrauben 16 lösbar befestigt. Infolgedessen kann ein Zugriff von außen auf die durch das Einsatzstück 14 im montierten Zustand abgedeckten Komponenten, insbesondere auf die Dichteinheit, zur Durchführung von Wartungsarbeiten problemlos durch Lösen der Befestigungsschrauben 16 und anschließendes Abnehmen des Einsatzstückes 14 erfolgen, ohne dass hierzu ein Demontieren des gesamten Lagerbockdeckels 9 von der Vorrichtung 1 notwendig ist. Hierzu ist das Einsatzstück 14 bevorzugt so bemessen, dass bei Abnahme des Einsatzstückes 14 ein Zugriff von außen auf die durch das Einsatzstück 14 im montierten Zustand abgedeckten Komponenten, insbesondere auf die Dichteinheit 7,8,19,20, so möglich ist, dass die Dichteinheit 7,8,19,20 aus der Walzenbohrung 6 aufgrund des ungehinderten Zugriffs auf die Buchse 7, gegebenenfalls unter Verwendung eines Abziehwerkzeuges, werden kann.

Bei im Lagerbockdeckel 9 montiertem Einsatzstück 14 sind hingegen zum einen die Kühlmittelzuführungen 11, 12, 17 und 18, zum anderen die Dichteinheit 7,8,19,20 gegen die aggressive Umgebung der Stranggießanlage geschützt, und somit wird einem übermäßigen Verschleiß vorgebeugt.

Die erfindungsgemäße Vorrichtung lässt sich auch in einer bereits bestehenden Stranggießanlage problemlos einbauen, da sämtliche die Erfindung kennzeichnenden Mittel auf Seiten des Lagerbockdeckels vorgesehen sind und die Funktionsweise der erfindungsgemäßen Vorrichtung somit unabhängig von der Ausführung des Lagerbocks 4 ist.

Bei der in Fig. 2 gezeigten Ausführungsform sind die Anordnung der Dichtelemente und deren jeweilige Halterung gegenüber der in Fig. 1 gezeigten Ausführungsform getauscht. Wie in Fig. 2 gezeigt, ist die als Kompensator ausgebildete elastische Hülse auf dem Lagerbockdeckel 9 festgelegt, während das erste Dichtelement 19 über eine Gleitringträgerhülse 25 auf der Buchse angeordnet ist.

Wie in Fig. 3 gezeigt, veranschaulicht die Querschnittsansicht der Ausführungsform der erfindungsgemäßen Vorrichtung entlang der Linie A-A aus Fig. 1 den Verlauf der Kühlkanäle 17;18 im Lagerbockdeckel 9 und den Übergang derselben 17;18 zum Einsatzstück 14.

### Bezugszeichenliste

- 1: Vorrichtung zum Ankuppeln einer Kühlmittelzuführung
- 2: Walze
- 3: Zapfen
- 4: Lagerbock
- 5: Wälzlager
- 6: axiale Walzenbohrung
- 7: Buchse
- 8: elastische Hülse
- 9: Lagerbockdeckel
- 10: Befestigungsschrauben des Lagerbockdeckels
- 11: Kühlmittelkanal
- 12: Kühlmittelkanal
- 13: Lagerbockaufstandsfläche
- 14: Einsatzstück
- 15: Siphonrohr
- 16: Befestigungsschrauben des Einsatzstückes
- 17: erster Kühlmittelkanal im Lagerbockdeckel
- 18: zweiter Kühlmittelkanal im Lagerbockdeckel
- 19: erstes Dichtelement in Form eines Gleitrings
- 20: zweites Dichtelement in Form eines Gleitrings
- 21: Ansatzstück
- 22: Ringplatte
- 23: Sicherungsring
- 24: Kragen/Verdrehsicherung
- 25: Gleitringträgerhülse
- 26: O-Ring

## Patentansprüche

1. Vorrichtung zum Ankuppeln einer Kühlmittelzuführung an eine Walze für Stranggießanlagen, wobei die Walze (2) über Zapfen (3) in einem Lagerbock (4) mittels Wälzlagern (5) gelagert ist und über eine durch die Zapfen (3) geführte axiale Walzenbohrung (6) mit einem Kühlmittel versorgbar ist, mit
- einer an dem Walzenzapfen (3) zum Ankuppeln an die Walzenbohrung (6) druckdicht festlegbaren Dichteinheit mit einer axialen Bohrung; und
- einem Lagerbockdeckel (9), der an dem Lagerbock (4) zur Abdeckung der axialen Walzenbohrung (6) festlegbar ist und wenigstens einen an die Kühlmittelzuführung anschließbaren Kühlmittelkanal (17;18), der über die Dichteinheit an die axiale Walzenbohrung (6) kuppelbar ist, aufweist;
- wobei die Dichteinheit als zweiteilige Dichteinheit ausgebildet ist, die eine in die Walzenbohrung (6) einsteckbare Buchse (7) mit einem an der Buchse festgelegten und sich damit drehenden ersten Dichtelement (19), das eine erste Dichtfläche aufweist, und ein zweites Dichtelement (20), das eine auf der ersten Dichtfläche ablaufende zweite Dichtfläche aufweist und das von dem Lagerbockdeckel (9) getragen wird oder in diesen integriert ist, umfasst,
- wobei die beiden Dichtelemente (19;20) als aufeinander ablaufende Gleitringe ausgebildet sind.
- wobei die in die Walzenbohrung (6) einsteckbare Buchse (7) im montierten Zustand über eine schraubenlose Steckverbindung in der Walzenbohrung (6) gesichert ist,
- wobei in den Lagerbockdeckel (9) ein die Dichteinheit (7;8;19;20) im montierten Zustand tragendes Einsatzstück (14) einsetzbar ist und wobei das Einsatzstück (14) zum druckdichten Ankuppeln der Kühlmittelzuführung über die Dichteinheit an die axiale Walzenbohrung (6) wenigstens einen Kühlmittelkanal aufweist, welcher im montierten Zustand des Einsatzstückes (14) an den Kühlmittelkanal (17;18) im Lagerbockdeckel (9) und die Dichteinheit (7;8;19;20) ankuppelt,
- wobei das Einsatzstück (14) derart bemessen ausgebildet ist, dass es im demontierten Zustand das Entfernen der Buchse (7) aus der Walzenbohrung ohne Entfernen des Lagerbockdeckels (9) ermöglicht,
- wobei das erste Dichtelement (19) von einer elastischen Hülse (8) getragen wird, die an der in die Walzenbohrung (6) einsteckbaren Buchse (7) druckdicht festgelegt ist, und
- wobei die Buchse (7) mit einem Anschlag (24) zur Begrenzung der Einstecktiefe in die axiale Walzenbohrung (6) versehen ist.

2. Vorrichtung zum Ankuppeln einer Kühlmittelzuführung an eine Walze für Stranggießanlagen, wobei die Walze (2) über Zapfen (3) in einem Lagerbock (4) mittels Wälzlagern (5) gelagert ist und über eine durch die Zapfen (3) geführte axiale Walzenbohrung (6) mit einem Kühlmittel versorgbar ist, mit
- einer an dem Walzenzapfen (3) zum Ankuppeln an die Walzenbohrung (6) druckdicht festlegbaren Dichteinheit mit einer axialen Bohrung; und
- einem Lagerbockdeckel (9), der an dem Lagerbock (4) zur Abdeckung der axialen Walzenbohrung (6) festlegbar ist und wenigstens einen an die Kühlmittelzuführung anschließbaren Kühlmittelkanal (17;18), der über die Dichteinheit an die axiale Walzenbohrung (6) kuppelbar ist, aufweist;
- wobei die Dichteinheit als zweiteilige Dichteinheit ausgebildet ist, die eine in die Walzenbohrung (6) einsteckbare Buchse (7) mit einem an der Buchse festgelegten und sich damit drehenden ersten Dichtelement (19), das eine erste Dichtfläche aufweist, und ein zweites Dichtelement (20), das eine auf der ersten Dichtfläche ablaufende zweite Dichtfläche aufweist und das von dem Lagerbockdeckel (9) getragen wird oder in diesen integriert ist, umfasst,
- wobei die beiden Dichtelemente (19;20) als aufeinander ablaufende Gleitringe ausgebildet sind,
- wobei die in die Walzenbohrung (6) einsteckbare Buchse (7) im montierten Zustand über eine schraubenlose Steckverbindung in der Walzenbohrung (6) gesichert ist,
- wobei in den Lagerbockdeckel (9) ein die Dichteinheit (7;8;19;20) im montierten Zustand tragendes Einsatzstück (14) einsetzbar ist und wobei das Einsatzstück (14) zum druckdichten Ankuppeln der Kühlmittelzuführung über die Dichteinheit an die axiale Walzenbohrung (6) wenigstens einen Kühlmittelkanal aufweist, welcher im montierten Zustand des Einsatzstückes (14) an den Kühlmittelkanal (17;18) im Lagerbockdeckel (9) und die Dichteinheit (7;8;19;20) ankuppelt, und wobei das Einsatzstück (14) derart bemessen ausgebildet ist, dass es im demontierten Zustand das Entfernen der Buchse (7) aus der Walzenbohrung ohne Entfernen des Lagerbockdeckels (9) ermöglicht,
- wobei das zweite Dichtelement (20) von einer elastischen Hülse (8) getragen wird, die am Lagerbockdeckel (9) druckdicht festgelegt ist, und
- wobei die Buchse (7) mit einem Anschlag (24) zur Begrenzung der Einstecktiefe in die axiale Walzenbohrung (6) versehen ist.

3. Vorrichtung nach Anspruch 2, wobei das zweite Dichtelement (20) im montierten Zustand über eine schraubenlose Steckverbindung mit dem Lagerbockdeckel (9) lösbar verbunden ist.

4. Vorrichtung nach einem der vorhergehenden Ansprüche, wobei die schraubenlose Steckverbindung(en) mit einer Verdrehsicherung versehen ist/sind.

5. Vorrichtung nach einem der vorhergehenden Ansprüche, wobei die Buchse (7) Abziehmittel aufweist, die im montierten Zustand mit einem Abziehwerkzeug zum Abziehen der Buchse (7) aus der Walzenbohrung (6) in Eingriff bringbar sind.

6. Vorrichtung nach einem der vorhergehenden Ansprüche, wobei die elastische Hülse (8) einen Kompensator aufweist.

7. Vorrichtung nach einem der vorhergehenden Ansprüche , wobei das Einsatzstück (14) einen ersten Kühlmittelkanal (11) und einen zweiten Kühlmittelkanal (12) aufweist, welche im montierten Zustand des Einsatzstückes an einen ersten bzw. zweiten Kühlmittelkanal (17;18) im Lagerbockdeckel (9) ankuppeln.

8. Vorrichtung nach Anspruch 7, wobei der erste Kühlmittelkanal (17) des Lagerbockdeckels (9) an eine Kühlmittelzufuhr und der zweite Kühlmittelkanal (18) des Lagerbockdeckels (9) an eine Kühlmittelabfuhr anschließbar ist.

9. Vorrichtung nach einem der vorhergehenden Ansprüche, wobei in dem wenigstens einen Kühlmittelkanal des Lagerbockdeckels (9) ein Verbindungsrohr zum Anschluss an eine an eine Kühlmittelabfuhr und/oder eine Kühlmittelzufuhr gekuppelte Lagerbockaufstandsfläche derart einsetzbar ist, dass das Verbindungsrohr von dem Lagerbockdeckel (9) aufgenommen wird.

10. Vorrichtung nach einem der vorhergehenden Ansprüche, wobei jeder der beiden Gleitringe (19;20) mittels jeweils eines Sicherungsringes (23) sicherbar ist.

11. Vorrichtung nach Anspruch 10, wobei jeder der Gleitringe (19;20) einen umlaufenden Gleitringkragen aufweist, an dem der Sicherungsring (23) angreift.

12. Vorrichtung nach Anspruch 10 oder 11, wobei zumindest einer der beiden Gleitringe zumindest einen Vorsprung aufweist, der in eine entsprechende Ausnehmung in der den Gleitring aufnehmenden Halterung eingreift.

## Claims

1. A device for coupling a coolant supply to a roller for continuous casting installations, the roller (2) being mounted in a pillow block (4) by means of roller bearings (5) via journals (3) and wherein the roller can be supplied with a coolant via an axial roller-borehole (6) guided through the journals (3), having
- a sealing unit which can be fixed to the roller journal (3) to couple it to the roller borehole (6) in a pressure-tight manner and which has an axial borehole; and
- a pillow block cover (9) which can be fixed to the pillow block (4) in order to cover the axial roller borehole (6) and which has at least one coolant duct (17; 18) being connectable to the coolant supply, said coolant duct being enabled to be coupled via the sealing unit to the axial roller borehole (6);
- wherein the sealing unit is configured as a two-part sealing unit having a bush (7) which can be inserted into a seat in the roller borehole (6) and having a first sealing element (19) being fixed to said bush and rotating therewith and having a first sealing surface, and a second sealing element (20) having a second sealing surface running on said first sealing surface and being supported by or integrated into said pillow block cover (9),
- wherein the two sealing elements (19; 20) are configured as sliding rings running on each other,
- wherein said bush (7) which can be inserted into said roller borehole (6) is secured in the fitted state via a screw-less plug-in connection in said roller borehole (6),
- wherein an inset (14) supporting the sealing unit (7; 8; 19; 20) in the fitted state can be inserted into the pillow block cover (9) and wherein the inset (14) comprises, for coupling the coolant supply via the sealing unit to the axial roller borehole (6) in a pressure-tight manner, at least one coolant duct which couples in the fitted state of the inset (14) the coolant duct (17; 18) in the pillow block cover (9) to the sealing unit (7; 8; 19; 20),
- wherein the inset (14) is formed with such dimensions that it enables in the dismounted state the removal of the bush (7) from the roller borehole without removal of the pillow block cover (9),
- wherein the first sealing element (19) is supported by an elastic sleeve (8) being fixed in a pressure-tight manner to the bush (7) which can be inserted into the roller borehole (6), and
- wherein the bush (7) is provided with a mechanical stop (24) to limit the plug-in depth in the axial roller borehole (6).

2. A device for coupling a coolant supply to a roller for continuous casting installations, the roller (2) being mounted in a pillow block (4) by means of roller bearings (5) via journals (3) and wherein the roller can be supplied with a coolant via an axial roller-borehole (6) guided through the journals (3), having
- a sealing unit which can be fixed to the roller journal (3) to couple it to the roller borehole (6) in a pressure-tight manner and which has an axial borehole; and
- a pillow block cover (9) which can be fixed to the pillow block (4) in order to cover the axial roller borehole (6) and which has at least one coolant duct (17; 18) being connectable to the coolant supply, said coolant duct being enabled to be coupled via the sealing unit to the axial roller borehole (6);
- wherein the sealing unit is configured as a two-part sealing unit having a bush (7) which can be inserted into a seat in the roller borehole (6) and having a first sealing element (19) being fixed to said bush and rotating therewith and having a first sealing surface, and a second sealing element (20) having a second sealing surface running on said first sealing surface and being supported by or integrated into said pillow block cover (9),
- wherein the two sealing elements (19; 20) are configured as sliding rings running on each other,
- wherein said bush (7) which can be inserted into said roller borehole (6) is secured in the fitted state via a screw-less plug-in connection in said roller borehole (6),
- wherein an inset (14) supporting the sealing unit (7; 8; 19; 20) in the fitted state can be inserted into the pillow block cover (9) and wherein the inset (14) comprises, for coupling the coolant supply via the sealing unit to the axial roller borehole (6) in a pressure-tight manner, at least one coolant duct which couples in the fitted state of the inset (14) the coolant duct (17; 18) in the pillow block cover (9) to the sealing unit (7; 8; 19; 20),
- wherein the inset (14) is formed with such dimensions that it enables in the dismounted state the removal of the bush (7) from the roller borehole without removal of the pillow block cover (9),
- wherein the second sealing element (20) is supported by an elastic sleeve (8) which is fixed to the pillow block cover (9) in a pressure-tight manner, and
- wherein the bush (7) is provided with a mechanical stop (24) to limit the plug-in depth in the axial roller borehole (6).

3. A device according to claim 2, wherein the second sealing element (20) is connected with the pillow block cover (9) in the fitted state by means of a screw-less plug-in connection in a releasable manner.

4. A device according to anyone of the preceding claims, wherein the screw-less plug-in connection(s) is/are provided with an antitwist protection.

5. A device according to anyone of the preceding claims, wherein said bush (7) has pulling-off means which can be engaged in the fitted state with a pulling-off device for pulling-off the bush (7) from the roller borehole (6).

6. A device according to anyone of the preceding claims, wherein the elastic sleeve (8) comprises a compensator.

7. A device according to anyone of the preceding claims, wherein the inset (14) comprises a first coolant duct (11) and a second coolant duct (12), which couple in the fitted state of the inset to a first, or a second, respectively, coolant duct (17; 18) in the pillow block cover (9).

8. A device according to claim 7, wherein the first coolant duct (17) of the pillow block cover (9) can be connected to a coolant supply, and wherein the second coolant duct (18) of the pillow block cover (9) can be connected to a coolant removal.

9. A device according to anyone of the preceding claims, wherein a connection pipe for connection to a pillow block footprint coupled to a coolant supply and/or a coolant removal is provided in the at least one coolant duct of the pillow block cover (9) in such a way that the connecting pipe is accommodated by the pillow block cover (9).

10. A device according to anyone of the preceding claims, wherein each of said sliding rings (19; 20) can be respectively secured by means of one securing ring (23).

11. A device according to claim 10, wherein each of said sliding rings (19; 20) comprises a surrounding sliding ring collar to which the securing ring (23) engages.

12. A device according to claim 10 or 11, wherein at least one of the two sliding rings comprises at least one protrusion which engages in a corresponding recess in the mounting which accommodates the sliding ring.

## Revendications

1. Dispositif conçu pour rattacher un système d'amenée de fluide de refroidissement à un cylindre dévolu à des installations d'extrusion, ledit cylindre (2) étant monté dans un sabot d'appui (4) au moyen de roulements à billes (5), par l'intermédiaire de tenons (3), et pouvant être alimenté en fluide de refroidissement par l'intermédiaire d'un alésage axial (6) parcourant lesdits tenons (3), comprenant
- une unité d'étanchement percée d'un alésage axial et pouvant être bloquée à demeure sur les tenons (3) du cylindre, avec étanchéité à la pression, en vue du rattachement à l'alésage (6) dudit cylindre ; et
- un couvercle (9) qui peut être bloqué à demeure sur le sabot d'appui (4), en vue de recouvrir l'alésage axial (6) du cylindre, et est muni d'au moins un canal (17 ; 18) à fluide de refroidissement pouvant être raccordé au système d'amenée de fluide de refroidissement, et pouvant être rattaché audit alésage axial (6) du cylindre au moyen de l'unité d'étanchement ;
- dispositif dans lequel l'unité d'étanchement est réalisée sous la forme d'une unité d'étanchement en deux parties, incluant une douille (7) pouvant être emboîtée dans l'alésage (6) du cylindre et associée à un premier élément d'étanchement (19) assujetti à ladite douille, tournant conjointement à cette dernière et pourvu d'une première surface d'étanchement, et à un second élément d'étanchement (20) qui est doté d'une seconde surface d'étanchement roulant sur ladite première surface d'étanchement, et est porté par le couvercle (9) du sabot d'appui ou est intégré dans ce dernier,
- dans lequel les deux éléments d'étanchement (19 ; 20) sont réalisés sous la forme de bagues de glissement roulant l'une sur l'autre,
- dans lequel la douille (7) emboîtable dans l'alésage (6) du cylindre est arrêtée dans ledit alésage (6) du cylindre, à l'état monté, par l'intermédiaire d'une solidarisation par emboîtement exempte de vissage,
- dans lequel une pièce intégrée (14), portant l'unité d'étanchement (7 ; 8 ; 19 ; 20) à l'état monté, peut être insérée dans le couvercle (9) du sabot d'appui, sachant que ladite pièce intégrée (14) présente, en vue du rattachement du système d'amenée de fluide de refroidissement à l'alésage axial (6) du cylindre avec étanchéité à la pression, au moyen de ladite unité d'étanchement, au moins un canal à fluide de refroidissement qui se rattache, à l'état monté de ladite pièce intégrée (14), à ladite unité d'étanchement (7 ; 8 ; 19 ; 20) et au canal (17 ; 18) à fluide de refroidissement pratiqué dans ledit couvercle (9) du sabot d'appui, et
- dans lequel la pièce intégrée (14) est réalisée avec un dimensionnement tel qu'elle autorise l'enlèvement de la douille (7) hors de l'alésage du cylindre, à l'état démonté, sans dépose du couvercle (9) du sabot d'appui.
- dans lequel le premier élément d'étanchement (19) est porté par un fourreau élastique (8) bloqué à demeure, avec étanchéité à la pression, sur la douille (7) emboîtable dans l'alésage (6) du cylindre, et
- dans lequel la douille (7) est dotée d'une butée (24), en vue de limiter la profondeur d'emboîtement dans l'alésage axial (6) du cylindre.

2. Dispositif conçu pour rattacher un système d'amenée de fluide de refroidissement à un cylindre dévolu à des installations d'extrusion, ledit cylindre (2) étant monté dans un sabot d'appui (4) au moyen de roulements à billes (5), par l'intermédiaire de tenons (3), et pouvant être alimenté en fluide de refroidissement par l'intermédiaire d'un alésage axial (6) parcourant lesdits tenons (3), comprenant
- une unité d'étanchement percée d'un alésage axial et pouvant être bloquée à demeure sur les tenons (3) du cylindre, avec étanchéité à la pression, en vue du rattachement à l'alésage (6) dudit cylindre ; et
- un couvercle (9) qui peut être bloqué à demeure sur le sabot d'appui (4), en vue de recouvrir l'alésage axial (6) du cylindre, et est muni d'au moins un canal (17 ; 18) à fluide de refroidissement pouvant être raccordé au système d'amenée de fluide de refroidissement, et pouvant être rattaché audit alésage axial (6) du cylindre au moyen de l'unité d'étanchement ;
- dispositif dans lequel l'unité d'étanchement est réalisée sous la forme d'une unité d'étanchement en deux parties, incluant une douille (7) pouvant être emboîtée dans l'alésage (6) du cylindre et associée à un premier élément d'étanchement (19) assujetti à ladite douille, tournant conjointement à cette dernière et pourvu d'une première surface d'étanchement, et à un second élément d'étanchement (20) qui est doté d'une seconde surface d'étanchement roulant sur ladite première surface d'étanchement, et est porté par le couvercle (9) du sabot d'appui ou est intégré dans ce dernier,
- dans lequel les deux éléments d'étanchement (19 ; 20) sont réalisés sous la forme de bagues de glissement roulant l'une sur l'autre,
- dans lequel la douille (7) emboîtable dans l'alésage (6) du cylindre est arrêtée dans ledit alésage (6) du cylindre, à l'état monté, par l'intermédiaire d'une solidarisation par emboîtement exempte de vissage,
- dans lequel une pièce intégrée (14), portant l'unité d'étanchement (7 ; 8 ; 19 ; 20) à l'état monté, peut être insérée dans le couvercle (9) du sabot d'appui, sachant que ladite pièce intégrée (14) présente, en vue du rattachement du système d'amenée de fluide de refroidissement à l'alésage axial (6) du cylindre avec étanchéité à la pression, au moyen de ladite unité d'étanchement, au moins un canal à fluide de refroidissement qui se rattache, à l'état monté de ladite pièce intégrée (14), à ladite unité d'étanchement (7 ; 8 ; 19 ; 20) et au canal (17 ; 18) à fluide de refroidissement pratiqué dans ledit couvercle (9) du sabot d'appui, et
- dans lequel la pièce intégrée (14) est réalisée avec un dimensionnement tel qu'elle autorise l'enlèvement de la douille (7) hors de l'alésage du cylindre, à l'état démonté, sans dépose du couvercle (9) du sabot d'appui.
- dans lequel le premier élément d'étanchement (19) est porté par un fourreau élastique (8) bloqué à demeure, avec étanchéité à la pression, sur la douille (7) emboîtable dans l'alésage (6) du cylindre, et
- dans lequel la douille (7) est dotée d'une butée (24), en vue de limiter la profondeur d'emboîtement dans l'alésage axial (6) du cylindre.

3. Dispositif selon la revendication 2, dans lequel le second élément d'étanchement (20) est relié amoviblement au couvercle (9) du sabot d'appui, à l'état monté, par l'intermédiaire d'une solidarisation par emboîtement exempte de vissage.

4. Dispositif selon l'une des revendications précédentes, dans lequel la (les) solidarisation(s) par emboîtement, exempte(s) de vissage, est (sont) équipée(s) d'une sécurité anti-rotation.

5. Dispositif selon l'une des revendications précédentes, dans lequel la douille (7) présente des moyens d'extraction pouvant être mis en prise avec un outil d'extraction, à l'état monté, en vue d'extraire ladite douille (7) hors de l'alésage (6) du cylindre.

6. Dispositif selon l'une des revendications précédentes, dans lequel le fourreau élastique (8) est muni d'un élément de compensation.

7. Dispositif selon l'une des revendications précédentes, dans lequel la pièce intégrée (14) comprend un premier canal (11) à fluide de refroidissement et un second canal (12) à fluide de refroidissement qui se rattachent, à l'état monté de ladite pièce intégrée, à des premier et second canaux respectifs (17 ; 18) à fluide de refroidissement pratiqués dans le couvercle (9) du sabot d'appui.

8. Dispositif selon la revendication 7, dans lequel le premier canal (17) à fluide de refroidissement du couvercle (9) du sabot d'appui peut être raccordé à une arrivée de fluide de refroidissement, le second canal (18) à fluide de refroidissement dudit couvercle (9) du sabot d'appui pouvant être raccordé à une évacuation de fluide de refroidissement.

9. Dispositif selon l'une des revendications précédentes, dans lequel un tube de jonction peut être inséré dans le canal à fluide de refroidissement à présence minimale, dans le couvercle (9) du sabot d'appui, en vue du raccordement à une surface d'assise verticale dudit sabot d'appui, rattachée à une évacuation de fluide de refroidissement et/ou à une arrivée de fluide de refroidissement, de façon telle que ledit tube de jonction soit reçu par ledit couvercle (9) du sabot d'appui.

10. Dispositif selon l'une des revendications précédentes, dans lequel chacune des deux bagues de glissement (19 ; 20) peut être arrêtée au moyen d'une bague respective de blocage (23).

11. Dispositif selon la revendication 10, dans lequel chacune des bagues de glissement (19 ; 20) présente un collet périphérique avec lequel la bague de blocage (23) vient coopérer.

12. Dispositif selon la revendication 10 ou 11, dans lequel au moins l'une des deux bagues de glissement comporte au moins une protubérance pénétrant dans un évidement correspondant, pratiqué dans le support recevant ladite bague de glissement.
